# EUROPÄISCHE PATENTSCHRIFT

(11) **EP 4 079 140 B1**
(45) Veröffentlichungstag und Bekanntmachung des Hinweises auf die Patenterteilung: **27.09.2023**
(21) Anmeldenummer: 22168255.2
(22) Anmeldetag: 13.04.2022
(51) Int. Cl.: A01D 78/10

(54) **SCHWADER**
WINDROWER
ANDAINEUSE

(30) Priorität: 23.04.2021 DE 102021110513
(43) Veröffentlichungstag der Anmeldung: 26.10.2022
(73) Patentinhaber: CLAAS Saulgau GmbH, 88348 Bad Saulgau (DE)
(72) Erfinder: Schelkle, Roland, 88348 Bad Saulgau (DE); Beyrle, Michael, 88521 Ertingen (DE); Schupp, Raphael, 88099 Neukirch (DE); Wetzel, Andreas, 88370 Ebenweiler (DE); Wolf, Gerd, 72511 Bingen (DE)

(56) Entgegenhaltungen:
- EP-A1- 3 254 549
- EP-A1- 3 566 557

## Beschreibung

Die Erfindung betrifft einen Schwader nach dem Oberbegriff des Anspruchs 1. Ein derartiger Schwader ist z.B. aus dem Dokument EP 3 566 557 A1 bekannt,

Aus der Praxis bekannte Schwader verfügen über ein Grundgestell, wobei sich das Grundgestell über Räder auf einem zu bearbeitenden Untergrund abstützt. Der Schwader ist über das Grundgestell, nämlich eine Deichsel desselben, an ein Zugfahrzeug koppelbar. Bei aus der Praxis bekannten Schwadern sind am Grundgestell Auslegerarme schwenkbar gelagert, wobei jeder Auslegerarm einen Schwadkreisel trägt. Die Auslegerarme können dabei an beiden Seiten oder auch an lediglich einer Seite des Grundgestells angreifen. Ferner ist es aus der Praxis bereits bekannt, dass jedem Auslegerarm eines Schwaders ein hydraulischer Betätigungszylinder zugeordnet ist, über welchen der jeweilige Auslegerarm zwischen einer Arbeitsstellung, einer Vorgewendestellung und einer Transportstellung verlagerbar ist. Derartige Betätigungszylinder sind typischerweise als einfachwirkende, hydraulische Betätigungszylinder ausgeführt.

Bislang bereitet es bei hydraulisch entlasteten Auslegerarmen Schwierigkeiten, insbesondere bei der Verlagerung eines Auslegerarms aus der Transportstellung in die Arbeitsstellung, stets eine zuverlässige Überführung des Auslegerarms in die Arbeitsstellung zu ermöglichen. Gegebenenfalls ist das Gewicht von Auslegerarm und Schwadkreisel abhängig vom wirksamen Hebelarm des Auslegerarms nicht ausreichend, dass der Auslegerarm ausgehend von der Transportstellung über die Vorgewendestellung in die Arbeitsstellung überführt werden kann, weil das Hydrauliköl aus dem Betätigungszylinder gegen den Entlastungsdruck abfließen muss.

Es besteht Bedarf an einem Schwader, bei welchem stets zuverlässig ein Auslegerarm ausgehend von der Transportstellung über die Vorgewendestellung in die Arbeitsstellung verlagert werden kann.

Hiervon ausgehend liegt der vorliegenden Erfindung die Aufgabe zugrunde, einen neuartigen Schwader zu schaffen.

Diese Aufgabe wird durch einen Schwader nach Anspruch 1 gelöst.

Ein Hydrauliksystem des Schwaders weist ein Druckbegrenzungsventil und erfindungsgemäß mindestens eine zum Druckbegrenzungsventil parallel geschaltete, schaltbare Ventileinheit auf, wobei die mindestens eine schaltbare Ventileinheit abhängig von ihrer Schaltstellung eine Funktion eines Rückschlagventils oder eine Funktion eines Bypasses bereitstellt. Die mindestens eine schaltbare Ventileinheit ist mit einem jeweiligen Auslegerarm derart wirkverbunden, dass dann, wenn der jeweilige Auslegerarm sich in einem ersten Schwenkbereich befindet, die jeweilige schaltbare Ventileinheit eine erste Schaltstellung einnimmt, in welcher die Funktion des Rückschlagventils aktiv und die Funktion des Bypasses inaktiv ist, und dass dann, wenn der jeweilige Auslegerarm sich in einem zweiten Schwenkbereich befindet, die jeweilige schaltbare Ventileinheit eine zweite Schaltstellung einnimmt, in welcher die Funktion des Rückschlagventils inaktiv und die Funktion des Bypasses aktiv ist. Es kann stets gewährleistet werden, einen Auslegerarm ausgehend von der Transportstellung über die Vorgewendestellung sicher und zuverlässig in die Arbeitsstellung zu verlagern. Dies wird durch die mindestens eine schaltbare Ventileinheit gewährleistet, die parallel zum Druckbegrenzungsventil des Hydrauliksystems des Schwaders geschaltet ist.

Dann, wenn der jeweilige Auslegerarm sich in einem ersten Schwenkbereich befindet, und zwar in einer Stellung, in welcher der jeweilige Auslegerarm bereits relativ weit in Richtung auf die Arbeitsstellung verschwenkt ist, ist die Funktion des Bypasses der jeweiligen schaltbaren Ventileinheit inaktiv. In diesem Fall ist dann der zur Verfügung stehende Hebelarm des jeweiligen Auslegerarms ausreichend, um allein aufgrund des Gewichts des jeweiligen Auslegerarms sowie des Schwadkreisels denselben zuverlässig in die Arbeitsstellung zu überführen.

Im zweiten Schwenkbereich hingegen, und zwar in einer Stellung, in welcher sich der jeweilige Auslegerarm noch relativ nahe bei der Transportstellung befindet, nimmt die jeweilige Ventileinheit eine Schaltstellung ein, in welcher die Funktion des Bypasses derselben aktiv ist. So kann das Druckbegrenzungsventil umgangen werden und selbst bei einem geringen zur Verfügung stehenden Hebelarm des jeweiligen Auslegerarms infolge des Gewichts des jeweiligen Auslegerarms sowie des Schwadkreisels der Auslegerarm zuverlässig in Richtung auf die Vorgewendestellung und damit letztendlich in die Richtung auf die Arbeitsstellung verlagert werden.

Nach einer Weiterbildung der Erfindung weist das Hydrauliksystem des Schwaders für die Auslegerarme eine gemeinsame schaltbare Ventileinheit oder alternativ für jeden Auslegerarm eine individuelle schaltbare Ventileinheit auf. Dann, wenn die Auslegerarme eine gemeinsame schaltbare Ventileinheit nutzen, sind dieselben gemeinsam verlagerbar. Dies erlaubt dann einen besonders einfachen Aufbau des Schwaders. Sollen die Auslegerarme unabhängig voneinander verlagerbar sein, so wirkt mit jedem Auslegerarm eine individuelle schaltbare Ventileinheit zusammen.

Nach einer Weiterbildung der Erfindung weist das Hydrauliksystem des Schwaders ein zum Druckbegrenzungsventil parallel geschaltetes Sperrventil auf. Über das Sperrventil ist eine vorteilhafte Wartung des Schwaders möglich.

Vorzugsweise weist das Hydrauliksystem des Schwaders für eine Bodenanpassung des jeweiligen Auslegerarms in der Arbeitsstellung mindestens einen mit den Betätigungszylindern fluidverbundenen Druckausgleichsbehälter auf, der auch zur Druckspeicherung dient. Mit den Auslegearmen kann ein gemeinsamer Druckausgleichsbehälter zusammenwirken. Es ist auch möglich, dass mit jedem Auslegerarm ein individueller Druckausgleichsbehälter zusammenwirkt. In jedem Fall ist eine Bodenanpassung für die Schwadkreisel so einfach und zuverlässig möglich.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung eines Schwaders;
- Fig. 2: ein Blockschaltbild eines Hydrauliksystems des Schwaders;
- Fig. 3: ein Blockschaltbild eines alternativen Hydrauliksystems.

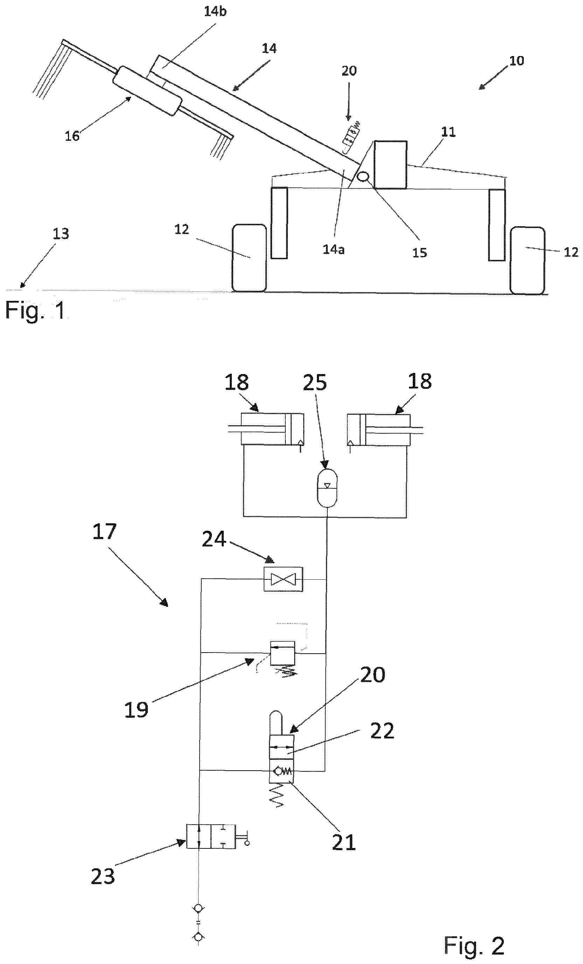

Die Erfindung betrifft einen Schwader. Fig. 1 zeigt eine stark schematisierte Darstellung eines Schwaders 10. Der Schwader 10 verfügt über ein Grundgestell 11. Das Grundgestell 11 verfügt über eine nicht gezeigte Zugdeichsel, über die der Schwader 10 an ein Zugfahrzeug angekoppelt werden kann. Am Grundgestell 11 greifen Räder 12 an, über die sich der Schwader 10 auf einem zu bearbeitenden Untergrund 13 abstützt. Am Grundgestell 11 des Schwaders 10 sind Auslegerarme 14 schwenkbar gelagert. In Fig. 1 ist lediglich ein derartiger Auslegerarm 14 gezeigt. Es ist möglich, dass in der Zeichenebene vor und/oder hinter dem gezeigten Auslegerarm 14 ein weiterer Auslegerarm angeordnet ist. Auch ist es möglich, dass auf der gegenüberliegenden Seite des Grundgestells 11 ein solcher Auslegerarm 14 schwenkbar am Grundgestell 11 gelagert ist.

Jeder Auslegerarm 14 verfügt über ein erstes Ende 14a, über welches derselbe am Grundkörper 11 um eine Schwenkachse 15 schwenkbar gelagert ist. An einem gegenüberliegenden Ende 14b des jeweiligen Auslegerarms 14 greift ein Schwadkreisel 16 an.

Der jeweilige Auslegerarm 14 ist zusammen mit dem an demselben gelagerten Schwadkreisel 16 verlagerbar, und zwar zwischen einer Arbeitsstellung, einer Vorgewendestellung und einer Transportstellung. Fig. 1 zeigt den dort sichtbaren Auslegerarm 14 in einer Vorgewendestellung. In einer Arbeitsstellung ist der Auslegerarm 14 weiter in Richtung auf den zu bearbeitenden Untergrund 13 abgesenkt, sodass der Rechkreisel 16 den Untergrund 13 bearbeiten kann. In der Transportstellung ist der jeweilige Auslegerarm 14 weiter nach oben verschwenkt.

Zum Schwenken des jeweiligen Auslegerarms 14 dient ein jeweiliger einfachwirkender, hydraulischer Betätigungszylinder 18, der in Fig. 1 nicht gezeigt ist und Bestandteil eines Hydrauliksystems 17 des Schwaders 10 ist.

Fig. 2 zeigt ein Blockschaltbild eines möglichen Hydrauliksystems 17 des Schwaders 10 mit zwei einfachwirkenden, hydraulischen Betätigungszylindern 18. Jeder der Betätigungszylinder 18 wirkt mit einem Auslegerarm 14 zusammen.

Das Hydrauliksystem 17 verfügt über ein Druckbegrenzungsventil 19 sowie in Fig. 2 über eine parallel zum Druckbegrenzungsventil 19 geschaltete Ventileinheit 20, wobei die Ventileinheit 20 schaltbar ist.

Die Ventileinheit 20 stellt abhängig von ihrer Schaltstellung entweder die Funktion eines Rückschlagventils 21 oder die Funktion des Durchflusses in beide Fließrichtungen und damit die Funktion eines Bypasses 22 zum Druckbegrenzungsventil 19 bereit. Die Funktion des Rückschlagventils 21 ermöglicht den Zufluss von Hydrauliköl zu den Betätigungszylindern 18, sperrt aber dessen Rückfluss. In der in Fig. 2 gezeigten Schaltstellung der Ventileinheit 20 ist die Funktion des Bypasses 22 inaktiv und die Funktion des Rückschlagventils 21 aktiv. In einer zweiten Schaltstellung der Ventileinheit 20 ist die Funktion des Bypasses 22 aktiv und die Funktion des Rückschlagventils 21 inaktiv.

Sollen Auslegerarme 14, die mit den Betätigungszylindern 18 zusammenwirken, zum Beispiel ausgehend von der Arbeitsstellung in die Vorgewendestellung oder weiter in die Transportstellung verlagert werden, so wird den Betätigungszylindern 18, abhängig von der Schaltstellung eines Sicherheitsventils 23, ausgehend von einem Hydrauliksystem (nicht gezeigt) des Zugfahrzeugs Hydrauliköl zugeführt. Das Hydrauliköl kann hierzu über die Ventileinheit 20, insbesondere über das Rückschlagventil 21 strömen und so den Betätigungszylindern 18 zugeführt werden, um den jeweiligen Auslegerarm 14 ausgehend von seiner Arbeitsstellung oder ausgehend von seiner Vorgewendestellung weiter zu verschwenken, und zwar in Richtung auf eine Transportstellung. Diese Strömung des Hydrauliköls ausgehend vom Hydrauliksystem (nicht gezeigt) des Zugfahrzeugs in Richtung auf die Betätigungszylinder 18 ist in beiden Schaltstellungen der Ventileinheit 20 möglich, also sowohl in der ersten Schaltstellung der Ventileinheit 20 als auch in der zweiten Schaltstellung der Ventileinheit 20. In dieser Strömungsrichtung des Hydrauliköls lässt auch die aktive Funktion des Rückschlagventils 21 einen Durchfluss des Hydrauliköls zu den Betätigungszylindern 18 zu.

Soll der Auslegerarm 14 in entgegengesetzter Richtung verlagert werden, also ausgehend von seiner Transportstellung in Richtung auf die Vorgewendestellung oder Arbeitsstellung, so fließt das Hydrauliköl in umgekehrter Strömungsrichtung aus den Betätigungszylindern 18 in Richtung auf das Sicherheitsventil 23 ab, und zwar über das Druckbegrenzungsventil 19 sowie abhängig von der Schaltstellung der Ventileinheit 20 gegebenenfalls auch über die Ventileinheit 20.

Nimmt die Ventileinheit 20 die erste Schaltstellung ein, in welcher die Funktion des Rückschlagventils 21 aktiv ist, so sperrt die Ventileinheit 20 die Strömung des Hydrauliköls parallel zum Druckbegrenzungsventil 19 ausgehend von den Betätigungszylindern 18 in Richtung auf das Sicherheitsventil 23.

Bei aktiver Funktion des Rückschlagventils 21 lässt die Ventileinheit 20 eine Hydraulikölströmung parallel zum Druckbegrenzungsventil 19 ausgehend vom Hydrauliksystem des Zugfahrzeugs in Richtung auf die Betätigungszylindern 18 zu, unterbindet jedoch in entgegengesetzter Richtung eine Hydraulikölströmung parallel zum Druckbegrenzungsventil 19 ausgehend von den Betätigungszylindern 18 in Richtung auf das Hydrauliksystem des Zugfahrzeugs.

Bei aktiver Funktion des Bypasses 22 ist in beiden Strömungsrichtungen eine Hydraulikölströmung parallel zum Druckbegrenzungsventil 19 möglich. Nimmt die Ventileinheit 20 also die zweite Schaltstellung ein, in welcher die Funktion des Bypasses 22 aktiv ist, lässt die Ventileinheit 20 die Strömung des Hydrauliköls ausgehend von den Betätigungszylindern 18 in Richtung auf das Sicherheitsventil 23 parallel zum Druckbegrenzungsventil 19 zu und zwar auch dann, wenn der Druck des Hydrauliköls unter dem eingestellten Druck des Druckbegrenzungsventils 19 liegt.

Die schaltbare Ventileinheit 20 des Hydrauliksystems 17 der Fig. 2 ist derart mit dem in Fig. 1 gezeigten Auslegerarm 14 wirkverbunden, dass dann, wenn sich der Auslegerarm 14 in einem ersten Schwenkbereich befindet, die schaltbare Ventileinheit 20 die erste Schaltstellung einnimmt, in welcher die Funktion des Rückschlagventils 21 aktiv und die Funktion des Bypasses 22 inaktiv ist, wohingegen dann, wenn sich der Auslegerarm 14 in einem zweiten Schwenkbereich befindet, die schaltbare Ventileinheit 20 eine zweite Schaltstellung einnimmt, in welcher die Funktion des Rückschlagventils 21 inaktiv und die Funktion des Bypasses 22 aktiv ist.

Der erste Schwenkbereich des Auslegerarms 14 reicht vorzugsweise von der Arbeitsstellung bis oberhalb der Vorgewendestellung. Der erste Schwenkbereich erstreckt sich vorzugsweise soweit über die Vorgewendestellung, dass im Arbeitsbetrieb des Schwaders 10 sichergestellt ist, dass beim Anheben der Schwadkreisel 16 in die Vorgewendestellung, die schaltbare Ventileinheit 20 nicht umschaltet, sondern weiterhin die erste Schaltstellung mit aktiver Funktion des Rückschlagventils 21 beibehält.

Dann, wenn der Auslegerarm 14 eine Stellung innerhalb des ersten Schwenkbereichs einnimmt, ist der effektive Hebelarm desselben groß genug, um infolge des Gewichts des Auslegerarms 14 sowie des Gewichts des Schwadkreisels 16 das Hydrauliköl aus den Betätigungszylindern 18 ausschließlich über das Druckbegrenzungsventil 19 abzuführen.

Ist hingegen der Auslegerarm 14 relativ weit in Richtung auf die Transportstellung verlagert und nimmt eine Stellung innerhalb des zweiten Schwenkbereichs ein, so ist der effektive Hebelarm des Auslegerarms 14 zu gering, um mit dem Gewicht desselben sowie des Schwadkreisels 16 gegen den eingestellten Druck des Druckbegrenzungsventils Hydrauliköl aus den Betätigungszylindern 18 über das Druckbegrenzungsventil 19 abzuführen. In diesem Fall nimmt jedoch dann die Ventileinheit 20 die zweite Schaltstellung ein, in welcher die Funktion des Bypasses 22 zum Druckbegrenzungsventils 19 aktiv ist, sodass dann das Hydrauliköl unter Umgehung des Druckbegrenzungsventils 19 aus den Betätigungszylindern 18 abströmen kann, wobei dem abfließenden Hydrauliköl ein geringerer Gegendruck entgegensteht, der durch Leitungswiderstände u. ä. verursacht wird.

Der zweite Schwenkbereich schließt sich oberhalb der Vorgewendestellung direkt an den ersten Schwenkbereich an und reicht bis zur Transportstellung. Die Übergangsstelle zwischen dem ersten und dem zweiten Schwenkbereich wird vorzugsweise so gewählt, dass diese oberhalb der Vorgewendestellung liegt, so dass beim Anheben der Schwadkreisel 16 in die Vorgewendestellung, an der schaltbaren Ventileinheit 20 die erste Schaltstellung mit aktiver Funktion des Rückschlagventils 21 geschaltet ist. Andererseits muss die Übergangsstelle so tief angeordnet sein, dass an der schaltbaren Ventileinheit 20 die zweite Schaltstellung mit aktiver Funktion des Bypasses 22 geschaltet bleibt, bis der effektive Hebelarm des Auslegerarms 14 groß genug ist, um mit dem Gewicht des Auslegerarms 14 und dem Gewicht des Schwadkreisels 16 das Hydrauliköl aus dem jeweiligen Betätigungszylinder 18 gegen den Entlastungsdruck über das Druckbegrenzungsventil 19 abzuführen.

Die Ventileinheit 20 ist abhängig von der Stellung des Auslegerarms 14 schaltbar. Während des Anhebens eines Auslegerarmes 14 schaltet die Ventileinheit 20 beim Übergang vom ersten zum zweiten Schwenkbereich von der ersten zur zweiten Schaltstellung. Beim Absenken von der Transportstellung zur Vorgewendestellung oder zur Arbeitsstellung schaltet die Ventileinheit 20 beim Übergang vom zweiten zum ersten Schwenkbereich von der zweiten Schaltstellung zur ersten Schaltstellung. Dadurch kann stets ein sicheres Überführen des jeweiligen Auslegerarms 14 ausgehend von seiner Transportstellung in Richtung auf die Vorgewendestellung sowie in Richtung auf die Arbeitsstellung desselben gewährleistet werden.

Im Hydrauliksystem 17 der Fig. 2 sind beide Betätigungszylinder 18 und demnach beide mit diesen Betätigungszylindern 18 zusammenwirkende Auslegerarme 14 gemeinsam verlagerbar. Dieselben nutzen demnach eine gemeinsame schaltbare Ventileinheit 20. Abhängig von der Position eines dieser Auslegerarme 14 nimmt die Ventileinheit 20 entweder die erste Schaltstellung oder die zweite Schaltstellung ein.

Fig. 2 zeigt weiterhin ein Sperrventil 24, welches parallel zum Druckbegrenzungsventil 19 geschaltet ist. Dieses Sperrventil 24 ist im Normalfall stets geschlossen und kann zu Wartungszwecken von Hand geöffnet werden. Für eine Reparatur kann so ein Druckabbau erfolgen.

Fig. 2 zeigt weiterhin einen Druckausgleichsbehälter 25. Bei dem Hydrauliksystem 17 der Fig. 2 wirken beide Betätigungszylinder 18 mit einem gemeinsamen Druckausgleichsbehälter zusammen und sind mit demselben fluidverbunden. Im Druckausgleichsbehälter 25 wird einerseits der Entlastungsdruck gespeichert und andererseits kann Hydrauliköl in den Druckausgleichsbehälter 25 hineingedrückt werden als auch aus diesem abfließen, wodurch ein Betätigungszylinder 18 aus- oder einfahren kann, um in der Arbeitsstellung eine Bodenanpassung für den jeweiligen Auslegerarm 14 zu ermöglichen.

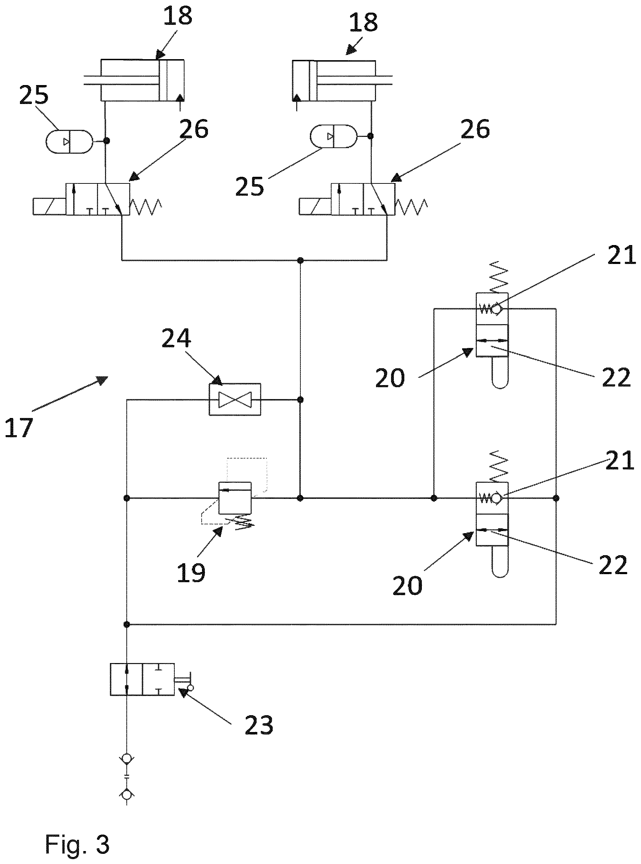

Fig. 3 zeigt ein zweites Hydrauliksystem 17, welches sich von dem Hydrauliksystem 17 der Fig. 2 dadurch unterscheidet, dass das Hydrauliksystem 17 der Fig. 3 der individuellen Betätigung von zwei Auslegerarmen 14 und damit der individuellen Druckversorgung der in Fig. 3 gezeigten Betätigungszylinder 18 dient. So sind in Fig. 3 zwei schaltbare Ventileinheiten 20 gezeigt, wobei mit jedem Auslegerarm 14 eine individuelle schaltbare Ventileinheit 20 zusammenwirkt. Ferner sind in Fig. 3 Einzelaushubventile 26 gezeigt. Mit jedem Betätigungszylinder 18 wirkt ein Einzelaushubventil 26 zusammen. Weiterhin ist in diesem Ausführungsbeispiel für jeden Betätigungszylinder 18 ein separater Druckausgleichsbehälter 25 vorgesehen.

Das Hydrauliksystem 17 der Fig. 3 ermöglicht es demnach, jeden Auslegerarm 14 über die individuelle Druckversorgung des jeweiligen Betätigungszylinders 18 individuell ausgehend von der Arbeitsstellung oder ausgehend von der Vorgewendestellung in Richtung auf die Transportstellung zu verlagern, sowie umgekehrt ausgehend von der Transportstellung in Richtung auf die Vorgewendestellung sowie in Richtung auf die Arbeitsstellung zu überführen. Dies ist von der Schaltstellung des jeweiligen Einzelaushubventils 26 abhängig.

Mit jedem Auslegerarm 14 wirkt eine schaltbare Ventileinheit 20 zusammen, die abhängig von ihrer Schaltstellung die Funktion eines Rückschlagventils 21 oder die Funktion eines Bypasses 22 bereitstellt, wobei abhängig von der Position oder Stellung des jeweiligen Auslegerarms 14 die jeweilige schaltbare Ventileinheit 20 entweder die erste Schaltstellung oder die zweite Schaltstellung einnimmt. Die entsprechenden Ausführungen dazu im Zusammenhang mit Fig. 2 gelten hier analog.

### Bezugszeichenliste

- 10: Schwader
- 11: Grundgestell
- 12: Rad
- 13: Untergrund
- 14: Auslegerarm
- 14a: Ende
- 14b: Ende
- 15: Schwenkachse
- 16: Schwadkreisel
- 17: Hydrauliksystem
- 18: Betätigungszylinder
- 19: Druckbegrenzungsventil
- 20: Ventileinheit
- 21: Rückschlagventil
- 22: Bypass
- 23: Sicherheitsventil
- 24: Sperrventil
- 25: Druckbehälter
- 26: Einzelaushubventil

## Patentansprüche

1. Schwader (10),
mit einem Grundgestell (11), das über Räder (12) auf einem zu bearbeitenden Untergrund (13) abstützbar ist und über das der Schwader (10) an ein Zugfahrzeug ankoppelbar ist,
mit mindestens zwei am Grundgestell (11) schwenkbar gelagerten Auslegerarmen (14),
wobei jeder Auslegerarm (14) einen Schwadkreisel (16) trägt,
wobei jedem Auslegerarm (14) ein einfachwirkender, hydraulischer Betätigungszylinder (18) zugeordnet ist, über welchen der jeweilige Auslegerarm (14) zwischen einer Arbeitsstellung, einer Vorgewendestellung und einer Transportstellung verlagerbar und
mit einem Hydrauliksystem (17), das ein Druckbegrenzungsventil (19) aufweist,
**dadurch gekennzeichnet, dass**
das Hydrauliksystem (17) des Schwaders mindestens eine zum Druckbegrenzungsventil (19) parallel geschaltete, schaltbare Ventileinheit (20) aufweist,
die mindestens eine schaltbare Ventileinheit (20) abhängig von ihrer Schaltstellung eine Funktion eines Rückschlagventils (21) oder eine Funktion eines Bypasses (22) bereitstellt,
die mindestens eine schaltbare Ventileinheit (20) mit einem jeweiligen Auslegerarm (14) derart wirkverbunden ist, dass dann, wenn sich der jeweilige Auslegerarm (14) in einem ersten Schwenkbereich befindet, die jeweilige schaltbare Ventileinheit (20) eine erste Schaltstellung einnimmt, in welcher die Funktion des Rückschlagventils (21) aktiv und die Funktion des Bypasses (22) inaktiv ist, und dass dann, wenn sich der jeweilige Auslegerarm (14) in einem zweiten Schwenkbereich befindet, die jeweilige schaltbare Ventileinheit (20) eine zweite Schaltstellung einnimmt, in welcher die Funktion des Rückschlagventils (21) inaktiv und die Funktion des Bypasses (22) aktiv ist.

2. Schwader nach Anspruch 1, **dadurch gekennzeichnet, dass** der erste Schwenkbereich des Auslegerarms (14) von der Arbeitsstellung bis oberhalb der Vorgewendestellung reicht.

3. Schwader nach Anspruch 1 oder 2, **dadurch gekennzeichnet, dass** der zweite Schwenkbereich oberhalb der Vorgewendestellung direkt an den ersten Schwenkbereich anschließt und bis zur Transportstellung reicht.

4. Schwader nach einem der Ansprüche 1 bis 3, **dadurch gekennzeichnet, dass** das Hydrauliksystem (17) des Schwaders (10) für die Auslegerarme (14) eine gemeinsame schaltbare Ventileinheit (20) aufweist.

5. Schwader nach einem der Ansprüche 1 bis 3, **dadurch gekennzeichnet, dass** das Hydrauliksystem (17) des Schwaders für jeden Auslegerarm (14) eine individuelle schaltbare Ventileinheit (20) aufweist.

6. Schwader nach einem der Ansprüche 1 bis 5, **dadurch gekennzeichnet, dass** das Hydrauliksystem (17) des Schwaders ein zum Druckbegrenzungsventil (19) parallel geschaltetes Sperrventil (24) aufweist.

7. Schwader nach einem der Ansprüche 1 bis 6, **dadurch gekennzeichnet, dass** das Hydrauliksystem (17) des Schwaders mindestens einen mit den Betätigungszylindern (18) fluidverbundenen Druckausgleichsbehälter (25) für eine Bodenanpassung des jeweiligen Auslegerarms (14) in der Arbeitsstellung desselben aufweist.

## Claims

1. Windrower (10),
having a main frame (11) which can be supported via wheels (12) on an underlying surface (13) to be cultivated and via which the windrower (10) can be coupled to a tractor, having at least two extension arms (14) which are mounted pivotably on the main frame (11),
wherein each extension arm (14) bears a windrower rotor (16),
wherein each extension arm (14) is assigned a single-action hydraulic actuating cylinder (18) via which the respective extension arm (14) can be moved between a working position, a headland position and a transport position, and
with a hydraulic system (17) which has a pressure-limiting valve (19),
**characterized in that**
the hydraulic system (17) of the windrower has at least one switchable valve unit (20) connected parallel to the pressure-limiting valve (19),
the at least one switchable valve unit (20) operates as a nonreturn valve (21) or as a bypass (22), depending on its switching position,
the at least one switchable valve unit (20) is operatively connected to a respective extension arm (14) in such a manner that, whenever the respective extension arm (14) is in a first pivoting region, the respective switchable valve unit (20) takes up a first switching position, in which operation of the nonreturn valve (21) is active and operation of the bypass (22) is inactive, and in such a manner that, whenever the respective extension arm (14) is in a second pivoting region, the respective switchable valve unit (20) takes up a second switching position, in which operation of the nonreturn valve (21) is inactive and operation of the bypass (22) is active.

2. Windrower according to Claim 1, **characterized in that** the first pivoting region of the extension arm (14) reaches from the working position to above the headland position.

3. Windrower according to Claim 1 or 2, **characterized in that** the second pivoting region directly adjoins the first pivoting region above the headland position and reaches as far as the transport position.

4. Windrower according to one of Claims 1 to 3, **characterized in that** the hydraulic system (17) of the windrower (10) has a common switchable valve unit (20) for the extension arms (14).

5. Windrower according to one of Claims 1 to 3, **characterized in that** the hydraulic system (17) of the windrower has an individual switchable valve unit (20) for each extension arm (14).

6. Windrower according to one of Claims 1 to 5, **characterized in that** the hydraulic system (17) of the windrower has a shutoff valve (24) which is connected parallel to the pressure-limiting valve (19).

7. Windrower according to one of Claims 1 to 6, **characterized in that** the hydraulic system (17) of the windrower has at least one pressure-equalizing container (25), which is fluidically connected to the actuating cylinders (18), for ground adaptation of the respective extension arm (14) in the working position thereof.

## Revendications

1. Andaineuse (10),
avec un châssis de base (11) qui peut s'appuyer par l'intermédiaire de roues (12) sur un sol (13) à travailler et par l'intermédiaire duquel l'andaineuse (10) peut être accouplée à un véhicule tracteur,
avec au moins deux bras (14) montés de manière pivotante sur le châssis de base (11),
chaque bras (14) portant un rotor d'andainage (16),
un vérin d'actionnement hydraulique à simple effet (18) étant associé à chaque bras (14), par l'intermédiaire duquel le bras (14) respectif peut être déplacé entre une position de travail, une position de tournière et une position de transport, et
avec un système hydraulique (17) qui présente une soupape de limitation de pression (19),
**caractérisée en ce que**
le système hydraulique (17) de l'andaineuse présente au moins une unité de soupape commutable (20), montée en parallèle à la soupape de limitation de pression (19),
l'au moins une unité de soupape commutable (20) assure, en fonction de sa position de commutation, une fonction d'une soupape antiretour (21) ou une fonction d'une dérivation (22),
l'au moins une unité de soupape commutable (20) est reliée de manière active à un bras (14) respectif de telle sorte que, lorsque le bras (14) respectif se trouve dans une première plage de pivotement, l'unité de soupape commutable (20) respective prend une première position de commutation dans laquelle la fonction du clapet anti-retour (21) est active et la fonction de la dérivation (22) est inactive, et que, lorsque le bras (14) respectif se trouve dans une deuxième plage de pivotement, l'unité de soupape commutable (20) respective prend une deuxième position de commutation dans laquelle la fonction du clapet anti-retour (21) est inactive et la fonction de la dérivation (22) est active.

2. Andaineuse selon la revendication 1, **caractérisée en ce que** la première plage de pivotement du bras (14) s'étend de la position de travail jusqu'au-dessus de la position de tournière.

3. Andaineuse selon la revendication 1 ou 2, **caractérisée en ce que** la deuxième plage de pivotement se raccorde directement à la première plage de pivotement au-dessus de la position de tournière et s'étend jusqu'à la position de transport.

4. Andaineuse selon l'une quelconque des revendications 1 à 3, **caractérisée en ce que** le système hydraulique (17) de l'andaineuse (10) présente une unité de soupape commutable (20) commune pour les bras (14).

5. Andaineuse selon l'une quelconque des revendications 1 à 3, **caractérisée en ce que** le système hydraulique (17) de l'andaineuse présente une unité de soupape commutable (20) individuelle pour chaque bras (14) .

6. Andaineuse selon l'une quelconque des revendications 1 à 5, **caractérisée en ce que** le système hydraulique (17) de l'andaineuse présente une soupape d'arrêt (24) montée en parallèle à la soupape de limitation de pression (19).

7. Andaineuse selon l'une quelconque des revendications 1 à 6, **caractérisée en ce que** le système hydraulique (17) de l'andaineuse présente au moins un contenant de compensation de pression (25) relié fluidiquement aux vérins d'actionnement (18) pour une adaptation au sol du bras (14) respectif dans la position de travail de celui-ci.
